# EUROPÄISCHE PATENTANMELDUNG

(11) **EP 4 556 256 A1**
(43) Veröffentlichungstag der Anmeldung: **21.05.2025**
(21) Anmeldenummer: 24212135.8
(22) Anmeldetag: 11.11.2024
(51) Int. Cl.: B60B 21/12, B60C 23/04

(54) **FAHRRADFELGE**

(30) Priorität: 15.11.2023 DE 202023106713 U
(71) Anmelder: New Ventures GmbH, 95111 Rehau (DE)
(72) Erfinder: Beckstein, Konstantin, 95111 Rehau (DE); Ehrenpfordt, Ricardo, 08056 Zwickau (DE); Luchscheider, Philipp, 95028 Hof (DE); Ranfeld, Constanze, 63225 Langen (DE); Schneider, Siegfried, 95189 Köditz (DE)

(57) **Zusammenfassung**

Die Erfindung betrifft eine Fahrradfelge (4) mit einem ringförmigen Felgenprofil (9) zur außenseitigen Aufnahme eines Reifenmantels (8), wobei das Felgenprofil (9) gemeinsam mit dem Reifenmantel (8) einen ringförmigen Hohlraum (80) zur Bereitstellung eines Überdruckbereiches (10) bildet, wobei das Felgenprofil (9) eine, vorzugsweise radial zum Felgenprofil (9) ausgerichtete, erste Öffnung zur Aufnahme eines Ventils (11) für die Befüllung des Überdruckbereiches (10) mit einem Gas (G) aufweist, und wobei am Felgenprofil (9) eine Messeinrichtung (12) mit mindestens einem Druckmesssensor (13) zur Ermittlung des Drucks (p) im Überdruckbereich (10) angeordnet ist. Erfindungsgemäß ist für die Aufnahme der Messeinrichtung (12) am Felgenprofil (9) eine, von der ersten Öffnung beabstandete, zweite Öffnung (14) vorgesehen, die eine vom Ventil (11) unabhängige Anordnung der Messeinrichtung (12) am Felgenprofil (9) ermöglicht.

## Beschreibung

Die Erfindung betrifft eine Fahrradfelge mit
- einem ringförmigen Felgenprofil zur außenseitigen Aufnahme eines Reifenmantels,
- wobei das Felgenprofil gemeinsam mit dem Reifenmantel einen ringförmigen Hohlraum zur Bereitstellung eines Überdruckbereiches bildet,
- wobei das Felgenprofil eine, vorzugsweise radial zum Felgenprofil ausgerichtete, erste Öffnung zur Aufnahme eines Ventils für die Befüllung des Überdruckbereiches mit einem Gas aufweist, und
- wobei am Felgenprofil eine Messeinrichtung mit mindestens einem Druckmesssensor zur Ermittlung des Drucks im Überdruckbereich angeordnet ist.

Für das Überwachen des Reifendrucks bei Fahrrädern sind heute Drucksensorsysteme bekannt, welche direkt am Reifenventil angebracht werden. Hierbei erfolgt eine direkte Messung des Fluiddrucks im Bereich des Ventils. Bei den bekannten Systemen handelt es sich um Nachrüstlösungen. Diese sind aufgrund der Montage am Ventil anfällig für mechanische Belastungen, Schläge und Schmutz. Der Luft- bzw. Medienkanal beginnend am Ventil bis hin zum Druckmesssensor muss aufwändig abgedichtet werden. So sind hierfür allein drei Dichtungen erforderlich, welche anfällig für Partikel und Verschmutzungen sind. Das entsprechend komplexe Systemdesign verursacht daher hohe Kosten. Aufgrund des wirkenden Drucks von bis zu 10 bar sind zusätzliche metallische Versteifungen notwendig (Metallkolben bzw. Metallring samt Haltestruktur im Kunststoffgehäuse etc.). Zudem sind diese nicht in die direkte Mechanik des Rades integriert, was sie als wenig geeignet darstellt für die initiale Ausstattung ab Werk sowie für die Einbettung in ganzheitliche Regelsysteme (Reifendruckregelung) oder sicherheitsrelevante Systeme wie ABS.

Vor diesem Hintergrund liegt der Erfindung die Aufgabe zugrunde, eine Fahrradfelge mit den eingangs beschriebenen Merkmalen anzugeben, welche eine konstruktiv einfachere Messung des Reifendrucks während der Fahrt ermöglicht.

Erfindungsgemäß wird diese Aufgabe dadurch gelöst, dass für die Aufnahme der Messeinrichtung am Felgenprofil eine, von der ersten Öffnung beabstandete, zweite Öffnung vorgesehen ist, die eine vom Ventil unabhängige Anordnung der Messeinrichtung am Felgenprofil ermöglicht. Erfindungsgemäß wird also die Reifendruckmessung konstruktiv vom Ventil des Reifens entkoppelt, wodurch eine vom Ventil vollkommen unabhängige Konstruktion des Reifendruckmesssystems ermöglicht wird. Dies erlaubt insbesondere auch eine problemlos einrichtbare werkseitige Integration des Reifendruckmesssystems in die Fahrradfelge, so dass dieses beispielsweise ohne Schwierigkeiten in ein elektronisches Assistenzsystem des Fahrrads eingebettet werden kann.

Die Fahrradfelge kann bei einem klassischen, rein pedalgetriebenen Fahrrad ohne motorische Unterstützung zum Einsatz kommen. Bei dem entsprechenden Fahrrad kann es sich aber auch um ein Pedelec oder ein E-Bike handeln. Ebenso ist der Einsatz der Fahrradfelge bei pedalgetriebenen Drei- und Vierrädern (ohne oder aber auch mit motorischer Unterstützung), insbesondere mit Speichen, möglich.

Vorzugsweise beträgt der entlang des Felgenprofils gemessene bogenförmige Abstand zwischen der ersten und der zweiten Öffnung mindestens 1 cm, insbesondere mindestens 2 cm, z.B. mindestens 10 cm. Dies erlaubt eine einfache Zugänglichkeit der zweiten Öffnung für die Montage der Messeinrichtung. Die zweite, vorzugsweise kreisförmig ausgebildete und radial zum Felgenprofil ausgerichtete, Öffnung kann einen Durchmesser von mindestens 4 mm, vorzugsweise mindestens 6 mm, aufweisen. Zweckmäßigerweise durchfasst die Messeinrichtung die zweite Öffnung, so dass der Druckmesssensor dem Überdruckbereich zugewandt ist und vom Druckmesssensor der Druck im Überdruckbereich erfassbar ist. Vorzugsweise ist der Druckmesssensor radial zum Felgenprofil ausgerichtet.

Der Druckmesssensor kann insbesondere im dem Überdruckbereich zugewandten Außenbereich des Felgenprofils angeordnet sein. In diesem Fall schließt der Druckmesssensor zweckmäßigerweise radial nach außen hin mit der, vorzugsweise im Querschnitt wannenförmigen, Berandung des Felgenprofils bündig ab oder ragt über diese außenseitig, also mantelseitig hinaus. Der in der Regel elektronische Druckmesssensor ist ein Druckmessgerät, welches die direkt oder auch indirekt erfasste physikalische Grö-βe Druck (= Kraft pro Fläche) in eine, zweckmäßigerweise elektronische, Ausgangsgröße als Maß für den Druck umformt. Der Druckmesssensor kann als eingebetteter, mikroelektromechanischer Sensor in Siliziumtechnologie, vorzugsweise resistiv, piezoresistiv oder kapazitiv oder als, beispielsweise folienartiger, Dehnungssensor, Kraftsensor, resistiver, piezoresistiver oder kapazitiver Sensor ausgebildet sein, insbesondere mit mindestens zwei Strukturen (Pixel).

Gemäß einer bevorzugten Ausführungsform der Erfindung weist die Messeinrichtung mindestens eine Steuerungs- und/oder Kommunikationseinheit, vorzugsweise zur drahtlosen, Übertragung des elektronischen Messsignals des Druckmesssensors und/oder zur Übertragung von durch die Steuerungs- und/oder Kommunikationseinheit vorverarbeiteter Daten an eine entfernte Empfangseinheit, z.B. an einen Fahrrad-Bordcomputer, auf. Diese sensornahe Datenverarbeitung ist relevant hinsichtlich des Energieverbrauchs der Messeinrichtung. Denn diese ermöglicht es, dass nur vergleichsweise geringe Datenmengen von der Messeinrichtung nach außen hin bspw. zum Fahrrad-Bordcomputer übertragen werden müssen, da ein wesentlicher Teil des Datentransports innerhalb der Messeinrichtung selbst zwischen dem Druckmesssensor und der Steuerungs- und/oder Kommunikationseinheit erfolgt. Die Steuerungs- und/oder Kommunikationseinheit ist insbesondere derart ausgebildet, dass sie Sensorsignaldaten, z.B. analoge oder digitale Sensorrohdaten, zwischenspeichern und z.B. mittels Sensordatenfusion, Datenfilterung, Merkmalsextraktion, Merkmalsselektion, Klassifikation vorverarbeiten und reduzieren kann. Die vorverarbeiteten und in der Datenmenge reduzierten Daten können dann der externen Empfangseinheit bereitgestellt werden. Hierdurch wird insbesondere die Energieversorgungseinheit der Messeinrichtung geschont, die energetische Lebensdauer somit verlängert und auch die Fehleranfälligkeit bei der Signalübertragung vom Druckmesssensor an die entfernte Empfangseinheit reduziert. Im Rahmen der Erfindung liegt es auch, dass der Fahrrad-Bordcomputer die Messsignale des Druckmesssensors heranzieht, um ein ABS-System des Fahrrads anzusteuern. Ebenso liegt es im Rahmen der Erfindung, dass die Messeinrichtung über einen elektronischen Datenspeicher, beispielsweise zur Speicherung der Messdaten des Druckmesssensors, verfügt.

Zweckmäßigerweise weist die Messeinrichtung eine Energieversorgungseinheit (z.B. eine Batterie) zur elektrischen Energieversorgung der Messeinrichtung auf. Im Rahmen der Erfindung liegt es ferner, dass die Energieversorgungseinheit mindestens eine Primärbatterie, insbesondere wechselbar, und/oder eine Sekundärbatterie und/oder einen Energieernter und/oder einen Energiegenerator auf Basis der Vibration oder Drehbewegung der Fahrradfelge und/oder Strukturen zur drahtlosen Energieübertragung, insbesondere zur induktiven Energieübertragung oder elektromagnetische Energieübertragung, und/oder Strukturen zur passiven Erfassung des Drucks, insbesondere durch Verstimmung einer elektromagnetischen Welle, enthält.

Insbesondere kann die Messeinrichtung neben dem Druckmesssensor zusätzlich eine, zweckmäßigerweise elektronische, Steuerungs- bzw. Regelungseinheit zur Anpassung des Drucks im Überdruckbereich anhand des Messsignals des Drucksensors an einen Sollwert (z.B. 2,5 bar Ü) bzw. Sollwertbereich aufweisen. Im Rahmen der Erfindung liegt es auch, dass diese Steuerungs- bzw. Regelungseinheit als Bestandteil der mindestens einen Steuerungs- und/oder Kommunikationseinheit ausgebildet ist. Das entsprechende Steuerungs- bzw. Regelungssignal kann z.B. an einen Fahrrad-Bordcomputer übertragen werden oder aber auch direkt an einen zweckmäßigerweise (z.B. an der Radnabe montierten) mitrotierenden Druckgasbehälter, welcher elektronische Signale verarbeiten kann. Hierbei wird das Messsignal des Druckmesssensors über einen Sender drahtlos oder aber auch vorzugsweise direkt drahtgebunden an die nahegelegene, insbesondere unmittelbar benachbarte Steuerungs- bzw. Regelungseinheit übermittelt, welche dieses Messignal als Eingangsgrö-βe für die Steuerung bzw. Regelung verwendet.

In diesem Zusammenhang liegt es insbesondere im Rahmen der Erfindung, dass die mindestens eine Steuerungs- und/oder Kommunikationseinheit und/oder die Energieversorgungseinheit an der dem Überdruckbereich abgewandten Innenseite des Felgenprofils angeordnet ist. Beispielsweise kann die Einheit in einem Bereich der Messeinrichtung enthalten sein, der von der Innenseite des Felgenprofils radial nach innen vorsteht.

Für die konstruktive Gestaltung des Überdruckbereiches gibt es insbesondere zwei Varianten, nämlich schlauchlos oder mit Schlauch. Bei der schlauchlosen Konstruktion begrenzen die Außenseite des Felgenprofils und die Innenseite des Reifenmantels gemeinsam den Überdruckbereich. Entsprechend befindet sich in diesem Fall der Druckmesssensor innerhalb des Überdruckbereiches. Bei der alternativen Konstruktion ist innerhalb des Hohlraums ein den Überdruckbereich begrenzender Schlauch angeordnet. In diesem Fall befindet sich der Druckmesssensor zweckmäßigerweise außerhalb des Überdruckbereiches, liegt aber an der Außenseite des Schlauches an und kann hierüber indirekt den Druck im Überdruckbereich messen.

Im Rahmen der Erfindung liegt es ferner, dass an der Außenseite des Felgenprofils ein Felgenband angeordnet ist, an dessen Innenseite der das Felgenprofil durchfassende Druckmesssensor anliegt. Alternativ hierzu kann an der Außenseite des Felgenprofils auch ein Felgenband angeordnet sein, in das der Druckmesssensor integriert ist. In diesem Fall ist das Felgenband dann entsprechend ein Bestandteil der Messeinrichtung. Der insbesondere folienartige Druckmesssensor kann mantelseitig bündig mit der äußeren, d.h. mantelseitigen Oberfläche des Felgenbandes abschließen. Die elektrische Kontaktierung des Druckmesssensors hin zur Steuerungs- und/oder Kommunikationseinrichtung bzw. zur Energieversorgungseinheit kann insbesondere mittels einer Steckverbindung für, vorzugsweise folienartige, elektrische Leiter durch das Felgenband hindurch erfolgen.

Die Messeinrichtung kann in das Felgenprofil eingeschraubt oder auch mit dieser verrastet sein. Im Rahmen der Erfindung liegt es auch, dass das Gehäuse der Messeinrichtung an die innenseitige Kontur des Felgenprofils angepasst ist und vorzugsweise flächig an dieser Kontur anliegt. Dies ist einerseits optisch ansprechend und reduziert außerdem die Gefahr einer Beschädigung der Messeinrichtung während der Fahrt. Grundsätzlich kann das Gehäuse der Messeinrichtung ein- oder auch mindestens zweiteilig sein und z.B. eine pilzförmige Außenkontur besitzen. Zweckmäßigerweise befinden sich ggf. die Steuerungs- und/oder Kommunikationseinheit und/oder die Energieversorgungseinheit innerhalb eines nabenseitigen Gehäuseteils des Gehäuses, während der Druckmesssensor von einem mantelseitigen Gehäuseteil des Gehäuses aufgenommen ist. Über geeignete Strukturen, beispielsweise eine Schraub- und/ oder Rastverbindung, können die beiden vorgenannten Gehäuseteile miteinander verbunden werden, wobei während dieses Verbindungsvorgangs zweckmäßigerweise gleichzeitig die Montage der Messeinrichtung am Felgenprofil und vorzugsweise auch die elektrische Kontaktierung der in den Gehäuseteilen befindlichen elektronischen Komponenten erfolgt.

Die Messeinrichtung kann auch grundsätzlich weitere Komponenten enthalten, z.B. mindestens einen weiteren Drucksensor und/oder mindestens einen Temperatursensor und/oder mindestens einen Beschleunigungssensor und/oder mindestens einen Drehratensensor und/oder mindestens einen Raddrehzahlsensor und/oder mindestens einen Vibrationssensor und/oder mindestens ein Mikrofon und/oder mindestens einen Hallsensor und/oder mindestens einen Magnetfeldsensor.

Im Rahmen der Erfindung liegt es ebenso, dass zumindest ein Bestandteil der Messeinrichtung als Teil einer eine an das Felgenprofil montierten Speiche ausgebildet ist. Vorzugsweise dient in diesem Fall die Messeinrichtung gleichzeitig als Verbindungselement der entsprechenden Speiche mit dem Felgenprofi. Insgesamt wird durch diese Ausführung eine Integration der Messeinrichtung in einen ohnehin erforderlichen Bestandteil des Rades erzielt.

Das Felgenprofil selbst kann als Hohlkammerprofil oder als Kastenfelgenprofil ausgebildet sein. Bei einer Ausbildung als Hohlkammerprofil weist das Felgenprofil entsprechend eine ringförmig umlaufende Hohlkammer mit einer naben- sowie einer mantelseitigen Wandung auf, wobei in diesem Fall die nabenseitige Wandung mit der zweiten Öffnung versehen ist und die mantelseitige Wandung mit einer dritten Öffnung versehen ist, die zweckmäßigerweise mit der zweiten Öffnung fluchtet. Die Messeinrichtung durchfasst dann entsprechend sowohl die zweite als auch die dritte Öffnung, so dass für den Druckmesssensor der Druck im Überdruckbereich messbar ist.

Gegenstand der Erfindung ist auch ein Rad für ein Fahrrad mit einer erfindungsgemäßen Fahrradfelge gemäß Anspruch 20 sowie ein Fahrrad mit solch einem Rad.

Im Folgenden wird die Erfindung anhand einer lediglich ein Ausführungsbeispiel darstellenden Zeichnung ausführlich erläutert. Es zeigen schematisch:
- Fig. 1:: ein Fahrrad mit einem erfindungsgemäßen Rad;
- Fig. 2:: den Ausschnitt a in Fig. 1;
- Fig. 3:: den Schnitt A - A in Fig. 2 und
- Fig. 4- 14:: weitere Ausführungsformen der Erfindung in einer der Fig. 3 entsprechenden Darstellung

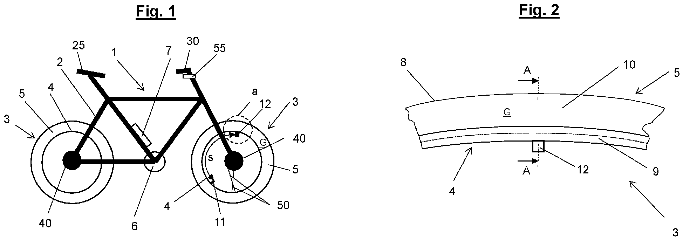

Die Fig. 1 zeigt ein Fahrrad 1 mit einem Fahrradrahmen 2 und zwei Rädern 3 sowie Sattel 25 und Lenker 30, wobei die Räder 3 jeweils einen auf eine Fahrradfelge 4 aufgezogenen, mit Druckgas G befüllten Reifen 5 aufweisen. Das dargestellte Fahrrad 1 ist als pedalgetriebenes Pedelec ausgebildet und entsprechend mit einer Fahrerunterstützung in Form eines Elektromotors 6 ausgerüstet, welcher mit einem Akkumulator 7 betrieben wird. Die Räder 3 besitzen jeweils eine Radnabe 40, die eine Rotationsbewegung des entsprechenden Rades 3 um die beiden Radachsen des Fahrrades 1 ermöglicht, und (nur beim Vorderrad 3 angedeutete) Speichen 50, welche zwischen Fahrradfelge 4 und Radnabe 40 angeordnet sind und jeweils die Fahrradfelge 4 mit der Radnabe 40 verbinden, Der Figur 1 ist ferner zu entnehmen, dass das Fahrrad 1 über einen am Lenker 30 montierten Fahrrad-Bordcomputer 55 mit einem (nicht näher dargestellten) Display verfügt, das beispielsweise die Geschwindigkeit des Fahrrades 1, die Reichweite des Akkumulators 7 etc. anzeigt. Die Fig. 2 zeigt einen vergrößerten Ausschnitt des Vorderrades 3 mit Fahrradfelge 4 und einem Reifenmantel 8.

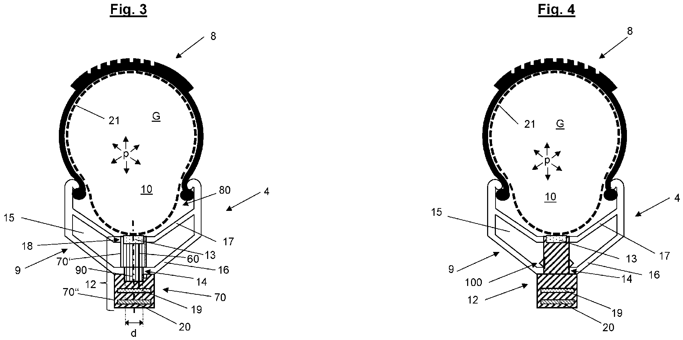

Wie anhand der Querschnittsdarstellung gemäß Fig. 3 in Verbindung mit den Fig. 1, 2 zu entnehmen ist, weist die Fahrradfelge 4 ein geschlossen ringförmiges Felgenprofil 9 zur außenseitigen Aufnahme des Reifenmantels 8 auf. Das Felgenprofil 9 bildet gemeinsam mit dem Reifenmantel 8 einen ringförmigen Hohlraum 80 zur Bereitstellung eines mit dem Druckgas G befüllten, geschlossen ringförmigen Überdruckbereiches 10. Das Felgenprofil 9 besitzt ferner eine übliche, radial zum Felgenprofil 9 ausgerichtete (nicht näher dargestellte) erste Öffnung zur Aufnahme eines Ventils 11 (Fig. 1) für die Befüllung des Überdruckbereiches 10 des Reifens 5 mit dem Druckgas G.

Wie den Figuren zu entnehmen ist, ist am Felgenprofil 9 eine elektronische Messeinrichtung 12 mit einem elektronischen Druckmesssensor 13 zur Ermittlung des aus der Befüllung des Reifens 5 mit dem Druckgas G resultierenden Drucks p im Überdruckbereich 10 angeordnet. Für die Aufnahme der mit einem Gehäuse 70 ausgestatteten Messeinrichtung 12 am Felgenprofil 9 ist eine, von der ersten Öffnung beabstandete, zweite kreisförmige und radial zum Felgenprofil 9 ausgerichtete Öffnung 14 vorgesehen, die eine vom Ventil 11 unabhängige Anordnung der Messeinrichtung 12 am Felgenprofil 9 ermöglicht. Das Gehäuse 70 dient zur Aufnahme der Bestandteile der Messeinrichtung 12 und ist daher sowohl aus mechanischen Gründen (Schutz der Bestandteile gegen Beschädigung) sowie auch aus optischen Gründen zweckdienlich. Der entlang des Innenradius des Felgenprofils 9 gemessene bogenförmige Abstand s (s. Fig 1) zwischen der ersten und der zweiten Öffnung 14 beträgt im Ausführungsbeispiel fast einen halben Innendurchmesser des Felgenprofils 9 multipliziert mit der Kreiszahl π, d.h. mehr als 50 cm. Die zweite Öffnung 14 hat einen Durchmesser d von mindestens 4 mm. Es ist erkennbar, dass die Messeinrichtung 12 die zweite Öffnung 14 durchfasst, so dass der Druckmesssensor 13 dem Überdruckbereich 10 zugewandt ist und vom Druckmesssensor 13 der Druck p im Überdruckbereich 10 erfassbar ist. Beim Ausführungsbeispiel gemäß Fig. 3 ist das Felgenprofil 13 als Hohlkammerprofil ausgebildet. Hierbei weist das Felgenprofil 13 entsprechend eine ringförmig umlaufende Hohlkammer 15 mit einer nabenseitigen Wandung 16 sowie einer mantelseitigen Wandung 17 auf, wobei die nabenseitige Wandung 16 mit der zweiten Öffnung 14 und die mantelseitige Wandung mit einer dritten, ebenfalls kreisförmigen Öffnung 18 versehen ist, die mit der zweiten Öffnung 14 fluchtet. Die Messeinrichtung 12 durchfasst dann entsprechend sowohl die zweite Öffnung 14 als auch die dritte Öffnung 18. Bei der Montage der Messeinrichtung 12 wird die den Druckmesssensor 13 enthaltende mantelseitige Komponente 12' der Messeinrichtung 12 durch die dritte Öffnung 18 geschoben und die nabenseitige Komponente 12" der Messeinrichtung 12 durch die zweite Öffnung 14. Sodann werden bei der Montage die beiden Komponenten 12`, 12" miteinander verbunden, im Ausführungsbeispiel im Bereich der zweiten Öffnung 14 mittels einer Schraubverbindung 90. Der Druckmesssensor 13 ist radial zum Felgenprofil 9 ausgerichtet und im dem Überdruckbereich 10 zugewandten Außenbereich des Felgenprofils 9 angeordnet. Der Druckmesssensor 13 steht im Ausführungsbeispiel gemäß Fig. 3 mantelseitig gegenüber der im Querschnitt wannenförmigen mantelseitigen Wandung 17 des Felgenprofils 9 radial leicht nach außen über, z.B. mindestens 0,2 mm. Die Messeinrichtung 12 weist eine elektronische Steuerungs- und Kommunikationseinheit 19 zur drahtlosen Übertragung des Messsignals des Druckmesssensors 13 und der von der Steuerungs- und Kommunikationseinheit 19 vorverarbeiteten Daten an den Fahrrad-Bordcomputer 55 und eine Energieversorgungseinheit 20 in Form einer elektrischen Batterie zur drahtlosen (oder alternativ auch drahtgebundenen) elektrischen Energieversorgung des Druckmesssensors 13 sowie der Steuerungs- und Kommunikationseinheit 19 auf. Das Gehäuse 70 der Messeinrichtung 12 ist zweiteilig ausgebildet besteht entsprechend aus einem mantelseitigen Gehäuseteil 70`, in dem der Druckmesssensor 13 angeordnet ist, und einem nabenseitigen Gehäuseteil 70", innerhalb dessen sich die Kommunikationseinheit 19 sowie die Batterie 20 befinden, wobei die beiden Gehäuseteile 70`, 70" im Bereich der zweiten Öffnung 14 miteinander verschraubt sind.

Die Steuerungs- und Kommunikationseinheit 19 ist derart ausgeführt, dass sie Sensorsignaldaten, insbesondere analoge oder digitale Sensorrohdaten, zwischenspeichern und z.B. mittels Sensordatenfusion, Datenfilterung, Merkmalsextraktion, Merkmalsselektion, Klassifikation vorverarbeiten und reduzieren kann. Diese vorverarbeiteten und in der Datenmenge reduzierten Daten können dann drahtlos an den Fahrrad-Bordcomputer 55 übermittelt werden. Das Messsignal des Druckmessensors 13 wird über eine (lediglich in Fig. 3 dargestellten) Leitung 60 an die nahegelegene Steuerungs- und Kommunikationseinheit 19 übermittelt, welche dieses Messignal als Eingangsgröße verwendet. Hierbei können innerhalb eines bestimmten Zeitintervalls erfasste Messsignale aufsummiert und als zeitlich gemitteltes Messsignal für die Regelung verwendet werden. Diese sensornahe Datenverarbeitung ist relevant hins. des Energieverbrauchs der elektronischen Komponenten der Messeinrichtung 12, also von Druckmesssensor 13 und Steuerungs- und Kommunikationseinheit 19. Die Einheit 19 sendet auf Basis des Messdaten dann in vergleichsweise großen Zeitabständen ein Datensignal z.B. an den Fahrrad-Bordcomputer 55 oder auch direkt Regelsignale an einen (nicht dargestellten) elektronisch ansteuerbaren Druckgasbehälter mit Druckgas G, welcher beispielsweise in der mitrotierenden Nabe 40 angeordnet sein kann und z.B. gemäß Regelungssignal Druckgas G in den Überdruckbereich 10 einfüllt, um einen vom Druckmesssensor 13 ermittelten Druckabfall im Reifen 5 zu kompensieren. Es ist erkennbar, dass die Steuerungs- und Kommunikationseinheit 19 ebenso wie die Batterie 20 an der dem Überdruckbereich 10 abgewandten Innenseite des Felgenprofils 9 angeordnet ist. Die Steuerungs- und Kommunikationseinheit 19 wie auch die Batterie 20 sind entsprechend in dem nach innen, also nabenseitig vorstehenden Teil des Gehäuses 70 der Messeinrichtung 12 angeordnet. Die Kommunikationseinheit 19 verfügt zusätzlich über einen elektronischen Datenspeicher, in dem beispielsweise die vom Druckmesssensor 13 ermittelten Messdaten abgespeichert werden können.

Der Fig. 3 kann ferner entnommen werden, dass innerhalb des Hohlraums 80 ein den Überdruckbereich 10 begrenzender Schlauch 21 angeordnet ist. Entsprechend befindet sich der Druckmesssensor 13 außerhalb des Überdruckbereiches 10, liegt aber an der Außenseite des Schlauches 21 an und kann hierüber indirekt den Druck p im Überdruckbereich 10 messen.

Beim Ausführungsbeispiel gemäß Fig. 4 ist die Messeinrichtung 12 mit dem Felgenprofil 9 über eine Raststruktur 100 verrastet, welche in Fig. 4 lediglich symbolisch dargestellt ist. Bei der Montage wird die Messeinrichtung 12 mit ihrem in diesem Fall einteiligen Gehäuse 70 von der Nabe 40 her kommend durch die beiden Öffnungen 14 und 18 geschoben. Das Gehäuse 70 weist außenseitig mindestens ein Rastelement oder, insbesondere durch Eindrehen einer Schaube sich aufspreizendes, Spreizelement auf, welches beim Einschub- bzw. Montagevorgang z.B. mit mindestens einem, am Felgenprofil 12, vorzugsweise im Bereich der zweiten Öffnung 14, angeordneten Gegenrastelement verrastet und somit die Messeinrichtung 12 sicher am Felgenprofil 9 befestigt.

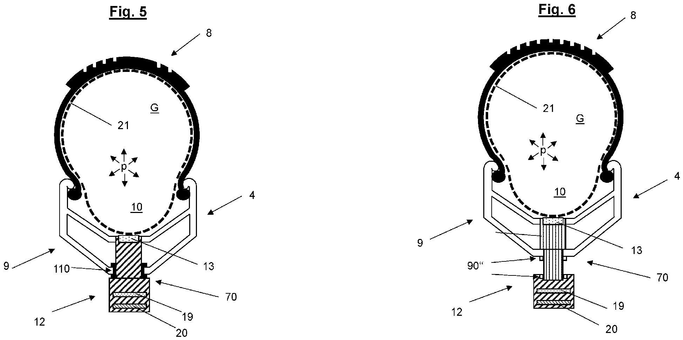

Beim Ausführungsbeispiel gemäß Fig. 5 ist das mit einem (nicht näher dargestellten) Außengewinde versehene Gehäuse 70 der Messeinrichtung 12 vorzugsweise ebenfalls einteilig ausgebildet und über ein an der Innenberandung der zweiten Öffnung 14 vorgesehenes Innengewinde, z.B. in Form einer in die zweite Öffnung 14 eingesetzten Blindnietmutter 110, mit dem Felgenprofil 9 verschraubt.

Gemäß Fig. 6 ist das Gehäuse 70 wiederum zweiteilig aufgebaut. Der mantelseitige Gehäuseteil 70' ist über eine Schraubverbindung 90` mit dem nabenseitigen Gehäuseteil 70" verbunden. Ferner ist der mantelseitige Gehäuseteil 70`, vorzugsweise an der nabenseitigen Außenseite der zweiten Öffnung 14, über eine zweite Schraubverbindung 90" mit dem Felgenprofil 9 verschraubt, wodurch die Messeinrichtung 12 an der Fahrradfelge 4 montiert wird. Das Gehäuse 70 weist insgesamt eine pilzförmige Struktur auf.

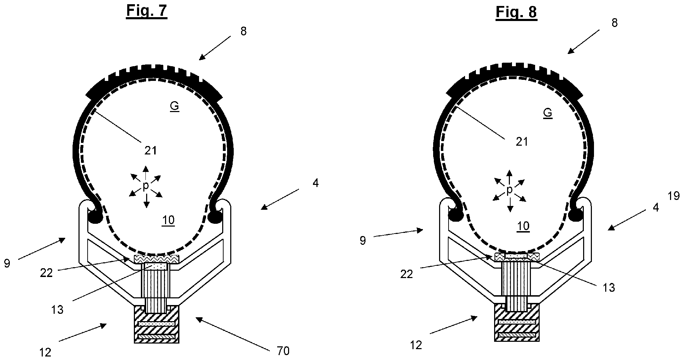

Beim Ausführungsbeispiel in Fig. 7 ist an der mantelseitigen Außenseite des Felgenprofils 9 ein Felgenband 22 angeordnet ist, an dessen nabenseitiger Innenseite der das Felgenprofil 9 durchfassende Druckmesssensor 13 anliegt. In diesem Fall misst der Druckmesssensor 13 durch das Felgenband 22 und auch den Schlauch 21 hindurch indirekt den Druck p innerhalb des Überdruckbereiches 10.

In Fig. 8 ist der Druckmesssensor 12 an der Außenseite des Felgenbandes 22 angeordnet und in dieses integriert. Das Felgenband 22 ist daher hier ein Bestandteil der Messeinrichtung 12. Im Ausführungsbeispiel schließt der insbesondere folienartige Druckmesssensor mantelseitig bündig mit der Oberfläche des Felgenbandes 22 ab, ist also in dieses entsprechend eingebettet. Die elektrische Kontaktierung des Druckmesssensors 12 hin zur Steuerungs- und Kommunikationseinrichtung 19 bzw. zur Batterie 20 erfolgt insbesondere mittels einer Steckverbindung, vorzugsweise für folienartige elektrische Leiter, und hier entsprechend durch das Felgenband 22 hindurch (nicht näher dargestellt).

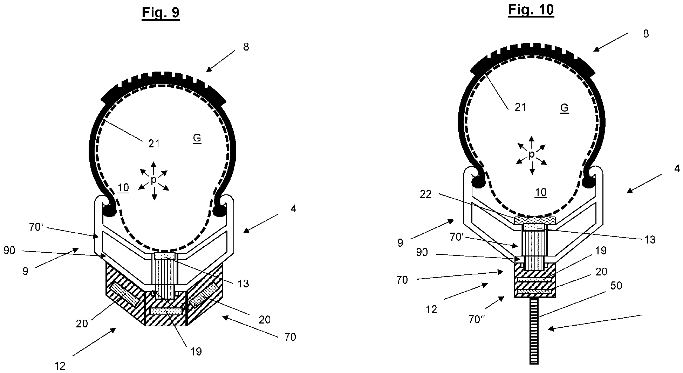

Beim Ausführungsbeispiel gemäß Fig. 9 ist das Gehäuse 70 der Messeinrichtung 12 an die innenseitige, d.h. nabenseitige Kontur des Felgenprofils 9 angepasst ausgebildet. Das Gehäuse 70 kann insbesondere auch derart flexibel gestaltet sein, dass es an unterschiedliche nabenseitige Geometrien von Felgenprofilen 9 anpassbar ist. Man erkennt, dass in diesem Ausführungsbeispiel das entsprechend gestaltete Gehäuse zwei Energieversorgungseinrichtungen aufnehmen kann, wodurch die Funktionssicherheit der Messeinrichtung 12 erhöht werden kann. Wie der Fig. 9 zu entnehmen ist, kann das Gehäuse 70 hier eine im Querschnitt gesehen, insbesondere bewegliche, sich an die Felgenform anpassbare, flügelförmige Kontur besitzen. Das Gehäuse 70 ist zweiteilig aufgebaut, wobei der nabenseitige Gehäuseteil 70" die Flügelform aufweist und mit dem mantelseitigen Gehäuseteil 70' über eine Schraubverbindung 90 verbunden ist.

Gemäß Fig. 10 ist der nabenseitige Bestandteil der Messeinrichtung 12, in dem sowohl die Steuerungs- und Kommunikationseinheit 19 als auch die Energieversorgungseinheit 20 enthalten sind, in eine Speiche 50 des entsprechenden Rades 3 integriert. Das Gehäuse 70 ist hier wiederum zweiteilig ausgebildet, wobei der nabenseitige Gehäuseteil 70" an der Speiche 50 befestigt ist und der mantelseitige Gehäuseteil 70' mit dem Druckmesssensor 13 sich innerhalb des Felgenprofils 9 befindet. Auch hier sind die beiden Gehäuseteile 70`, 70" durch eine Schaubverbindung 90 miteinander verbunden.

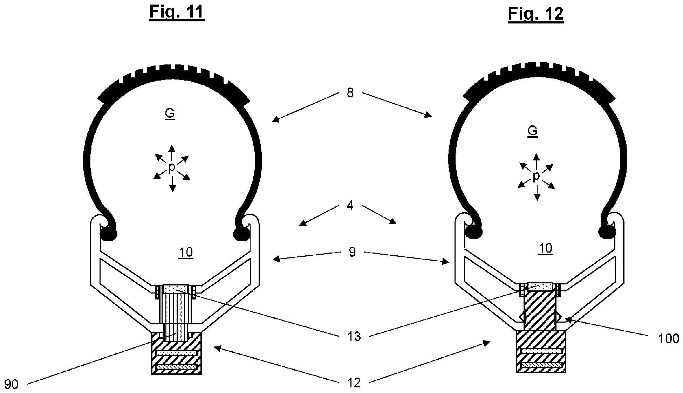

Bei den Ausführungsbeispielen gemäß Fig. 11, 12 begrenzen jeweils die mantelseitige Außenseite des Felgenprofils 9 sowie die Innenseite des Reifenmantels 8 gemeinsam den Überdruckbereich 10, d.h. diese Ausführungen sind schlauchlos. In diesem Fall befindet sich der Druckmesssensor 12 innerhalb des Überdruckbereiches 10 und misst direkt den Druck p innerhalb dieses Bereiches 10. Die Messeinrichtung 12 ist mit (nicht näher dargestellten) Dichtungen versehen, welche den Überdruckbereich 10 gegenüber der Messeinrichtung 12 und der mantelseitigen Außenseite des Felgenprofils 9 abdichten.

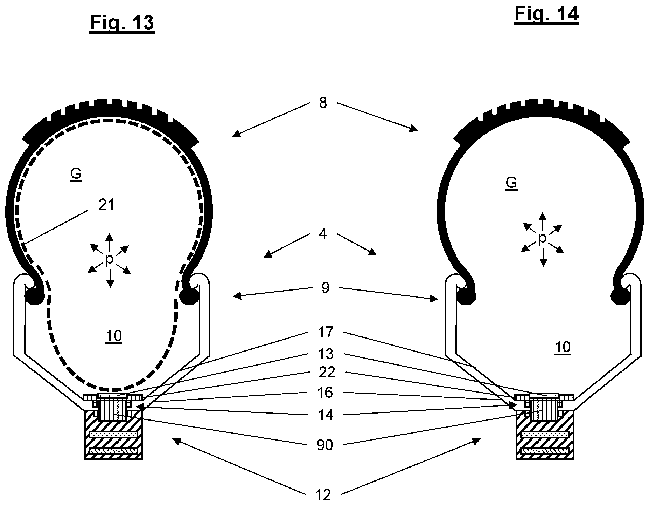

In den Fig. 13, 14 ist das Felgenprofil 9 als Kastenfelgenprofil, d.h. ohne geschlossene Hohlkammerstruktur, ausgebildet. Hier sind entsprechend die mantelseitige Wandung 17 und die nabenseitige Wandung 16 des Felgenprofils unmittelbar benachbart und die zweite Öffnung 14 erstreckt sich von der einen Wandung 16 zur anderen Wandung 17. Während die Fig. 13 ein Ausführungsbeispiel mit Schlauch 21 zeigt, ist in Fig. 14 eine schlauchlose Variante dargestellt.

Die erfindungsgemäße Fahrradfelge kann bei einem klassischen, rein pedalgetriebenen Fahrrad ohne motorische Unterstützung zum Einsatz kommen. Bei dem entsprechenden Fahrrad kann es sich aber auch um ein Pedelec oder ein E-Bike handeln. Ebenso ist der Einsatz der Fahrradfelge bei pedalgetriebenen Drei- und Vierrädern (ohne oder aber auch mit motorischer Unterstützung), insbesondere mit Speichen, möglich.

## Patentansprüche

1. Fahrradfelge (4) mit
- einem ringförmigen Felgenprofil (9) zur außenseitigen Aufnahme eines Reifenmantels (8),
- wobei das Felgenprofil (9) gemeinsam mit dem Reifenmantel (8) einen ringförmigen Hohlraum (80) zur Bereitstellung eines Überdruckbereiches (10) bildet,
- wobei das Felgenprofil (9) eine, vorzugsweise radial zum Felgenprofil (9) ausgerichtete, erste Öffnung zur Aufnahme eines Ventils (11) für die Befüllung des Überdruckbereiches (10) mit einem Gas (G) aufweist, und
- wobei am Felgenprofil (9) eine Messeinrichtung (12) mit mindestens einem Druckmesssensor (13) zur Ermittlung des Drucks (p) im Überdruckbereich (10) angeordnet ist,
**dadurch gekennzeichnet, dass** für die Aufnahme der Messeinrichtung (12) am Felgenprofil (9) eine, von der ersten Öffnung beabstandete, zweite Öffnung (14) vorgesehen ist, die eine vom Ventil (11) unabhängige Anordnung der Messeinrichtung (12) am Felgenprofil (9) ermöglicht.

2. Fahrradfelge (4) nach Anspruch 1, **dadurch gekennzeichnet, dass** der entlang des Innenradius des Felgenprofils (9) gemessene bogenförmige Abstand (s) zwischen der ersten und der zweiten Öffnung (14) mindestens 1 cm, vorzugsweise mindestens 2 cm, beträgt.

3. Fahrradfelge (4) nach Anspruch 1 oder 2, **dadurch gekennzeichnet, dass** die Messeinrichtung (12) die zweite Öffnung (14) durchfasst, so dass der Druckmesssensor (13) dem Überdruckbereich (10) zugewandt ist und vom Druckmesssensor (13) der Druck (p) im Überdruckbereich (10) erfassbar ist.

4. Fahrradfelge (4) nach einem der Ansprüche 1 bis 3, **dadurch gekennzeichnet, dass** die Messeinrichtung (12) mindestens eine Steuerungs- und/oder Kommunikationseinheit (19), vorzugsweise zur drahtlosen Übertragung des Messsignals des Druckmesssensors (13) und/oder zur Übertragung von durch die Steuerungs- und/oder Kommunikationseinheit (19) vorverarbeiteter Daten an eine entfernte Empfangseinheit (55), und/oder eine Energieversorgungseinheit (20) zur insbesondere elektrischen Energieversorgung der Messeinrichtung (12) aufweist.

5. Fahrradfelge (4) nach einem der Ansprüche 1 bis 4, **dadurch gekennzeichnet, dass** die Messeinrichtung (12) neben dem Druckmesssensor (13) zusätzlich eine Steuerungs- bzw. Regelungseinheit zur Anpassung des Drucks (p) im Überdruckbereich (10) anhand des Messsignals des Druckmesssensors (13) an einen Sollwert bzw. Sollwertbereich aufweist oder diese Steuerungs- bzw. Regelungseinheit als Bestandteil der mindestens einen Steuerungs- und/oder Kommunikationseinheit (19) ausgebildet ist.

6. Fahrradfelge (4) nach Anspruch 4 oder 5, **dadurch gekennzeichnet, dass** die mindestens eine Steuerungs- und/oder Kommunikationseinheit (19) und/oder die Energieversorgungseinheit (20) an der dem Überdruckbereich (10) abgewandten Innenseite des Felgenprofils (9) angeordnet ist.

7. Fahrradfelge (4) nach einem der Ansprüche 1 bis 6, **dadurch gekennzeichnet, dass** die Außenseite des Felgenprofils (9) und die Innenseite des Reifenmantels (8) gemeinsam den Überdruckbereich (10) begrenzen.

8. Fahrradfelge (4) nach einem der Ansprüche 1 bis 7, **dadurch gekennzeichnet, dass** innerhalb des Hohlraums (80) ein den Überdruckbereich (10) begrenzender Schlauch (21) angeordnet ist.

9. Fahrradfelge (4) nach einem der Ansprüche 1 bis 8, **dadurch gekennzeichnet, dass** an der Außenseite des Felgenprofils (9) ein Felgenband (22) angeordnet ist, an dessen Innenseite der das Felgenprofil (9) durchfassende Druckmesssensor (13) anliegt.

10. Fahrradfelge (4) nach einem der Ansprüche 1 bis 9, **dadurch gekennzeichnet, dass** an der Außenseite des Felgenprofils (9) ein Felgenband (22) angeordnet ist, in das der Druckmesssensor (13) integriert ist.

11. Fahrradfelge (4) nach einem der Ansprüche 1 bis 10, **dadurch gekennzeichnet, dass** die Messeinrichtung (12) ein, beispielsweise ein- oder mindestens zweiteiliges, Gehäuse (70) aufweist.

12. Fahrradfelge (4) nach Anspruch 11, **dadurch gekennzeichnet, dass** das Gehäuse (70) der Messeinrichtung (12) an die innenseitige Kontur des Felgenprofils (9) angepasst ist.

13. Fahrradfelge (4) nach einem der Ansprüche 1 bis 12, **dadurch gekennzeichnet, dass** zumindest ein Bestandteil der Messeinrichtung (12) als Teil einer an das Felgenprofil (9) montierten Speiche (50) ausgebildet ist.

14. Rad (3) für ein Fahrrad (1) mit
- einer Fahrradfelge (4) mit Reifenmantel (8) und Ventil (11) nach einem der Ansprüche 1 bis 13,
- einer Radnabe (40), die eine Rotationsbewegung das Rades (3) um eine Radachse des Fahrrades (1) ermöglicht, und
- Speichen (50), welche zwischen Fahrradfelge (4) und Radnabe (40) angeordnet sind und die Fahrradfelge (4) mit der Radnabe (40) verbinden.

15. Fahrrad (1) mit mindestens einem Rad nach Anspruch 14.
